# EUROPÄISCHE PATENTANMELDUNG

(11) **EP 2 418 037 A1**
(43) Veröffentlichungstag der Anmeldung: **15.02.2012**
(21) Anmeldenummer: 10172642.0
(22) Anmeldetag: 12.08.2010
(51) Int. Cl.: B23H 3/04, B23H 3/06

(54) **Elektrode für ECM**

(71) Anmelder: Boehringer Ingelheim microParts GmbH, 44227 Dortmund (DE)
(72) Erfinder: Huetten, FRANK, 55216, Ingelheim am Rhein (DE)
(74) Vertreter: Hammann, Heinz

(57) **Zusammenfassung**

Die Erfindung betrifft Elektroden für die elektrochemische Metallbearbeitung und sowie deren Herstellung und Verwendung. Um mikrostrukturierte oder im Mikrometerbereich maßgenaue Bauteile mittels des elektrochemischen Abtragens herzustellen, sind konturgenaue Elektroden erforderlich. Eine derartige Elektrode soll eine Stromdichte größer 10 A/cm² zerstörungsund abnutzungsfrei leiten.
Insbesondere Elektroden für Bauteile zur Verwendung in der Mikrosystemtechnik, das heißt Bauteile, die eine dreidimensional geformten Innen- und/oder Außenkontur mit Strukturbreiten im Millimeter oder Sub-Millimeterbereich aufweisen, sind derartige Elektroden schwer und/oder nur sehr kostenaufwendig herzustellen.
Erfindungsgemäß wird daher vorgeschlagen, dass die Elektrode zumindest teilweise aus einem nicht metallischen Material, insbesondere Kunststoff, besteht, das mit gängigen Mikrobearbeitungstechniken oder Mikrostrukturierungstechniken, bearbeitet werden kann.

## Beschreibung

Die vorliegende Erfindung betrifft die elektrochemische Metallbearbeitung mittels einer Elektrode gemäß dem Oberbegriff des Anspruches 1, eine Verfahren zur Herstellung einer solchen Elektrode gemäß Anspruch 10 und eine Verwendung einer deartigen Elektrode nach Anspruch 14.

Die elektrochemische Metallbearbeitung ist ein bekanntes Verfahren, bei dem eine kathodisch mit Strom beaufschlagte Elektrode über einen Elektrolyten ein metallisches anodisch beaufschlagtes Werkstück elektrisch-galvanisch kontaktiert.

In neuerer Zeit wurde dieses Verfahren dahingehend weiterentwickelt, dass mittels kleiner Abstandsspalte zwischen der formgebenden Elektrode und dem zu bearbeitenden Werkstück eine präzisere Maßhaltigkeit hergestellter Werkstücke möglich wurde.

Dieses spezielle PEM (Präzise elektrochemische Metallbearbeitung)-Verfahren beruht darauf, dass die Elektrode der zu bearbeitenden Oberfläche bis auf einige 10 Mikrometer periodisch genähert wird.

Der zwischen den Oberflächen befindliche Spalt, der durch die Oszillation der Elektrode oder des Werkstückes zwischen 10 Mikrometern und 500 Mikrometern variiert, wird durchgehend von einem elektrisch leitfähigen Elektrolyten gespült.

Zwischen Elektrode und Werkstück wird eine Potentialdifferenz von einigen Volt bis einigen zehn Volt angelegt, wodurch ein Stromfluss durch den Elektrolyten stattfindet, der Atome aus dem auf anodischen Potential liegendem Werkstoff heraus löst.

Der Stromfluss erfolgt gepulst, wobei ein Gleichstromimpuls von einigen Millisekunden bis zu einigen zehn Millisekunden während des Zeitraumes der geringsten Spaltbreite fließt.
Um ein Abtragen von Material durch diesen galvanischen Prozess zu erreichen, wird eine Stromdichte von größer 10 A/cm², insbesondere größer 100 A/cm² eingesetzt.

Abhängig von der Größe der Werkstückoberfläche ergeben sich dadurch typische Strome von einigen Ampere bis zu einigen tausend Ampere, die zur Erzeugung der erforderlichen Stromdichte eingebracht werden müssen.

Durch den galvanischen Prozess wird im nanoskaligen bis mikroskaligem Maßstab bei jedem Strompuls Material vom Werkstück abgetragen, das in den Elektrolyten übergeht.

Durch einen ständigen Elektrolytfluss werden diese ausgelösten Metallionen von den Werkstückoberfläche abtransportiert, so dass in einem nachfolgenden Hubvorgang die Elektrode und die Werkstückoberfläche mit frischem Elektrolyten benetzt sind.

Typisch oszilliert die Elektrode mit Frequenzen bis zu 100 Hertz, bevorzugt bis zu 60 Hertz.

Mittels der PEM-Technologie ist es möglich, eine Strukturgenauigkeit von einigen Mikrometern oder auch im Submikrometerbereich zu erzielen, da der Spülspalt zum Zeitpunkt des Gleichstromimpulses auf wenige 10 Mikrometer gezielt eingestellt werden kann.

Die Bearbeitungsgenauigkeit ist davon abhängig, in welcher Form der effektive elektrische Feldstärkeverlauf und somit der Stromfluss zwischen der Kontur der Elektrode und der Werkstückoberfläche verläuft.

Die Bearbeitungsgenauigkeit kann unter anderem durch Abstimmung der Parameter Spaltbreite, Spüldruck und Spülvolumen des Elektrolyten im Spalt, Haltezeiten und Oszillationszeit der Elektrode, sowie der Strompulsform und durch die Strompulszeit optimiert werden.

Basis für die Bearbeitungsgenauigkeit, die Formgenauigkeit und Maßgenauigkeit der Werkstoffkontur ist die Konturgenauigkeit der Elektrode, da die Elektrode die Masterform bildet.

Diese Masterelektrode wird typisch mittels Spanabhebenden Werkzeugmaschinen hergestellt, wobei durch die Bearbeitungsgenauigkeit der Werkzeugmaschinen und die Dimension des spanabhebenden Werkzeuges Grenzen hinsichtlich der Abbildung von Mikrostrukturen gesetzt sind.

Die Herstellung hochgenauer Metallelektroden mit einer strukturgenauen Kontur im einhundertstel Millimeterbereich ist mit herkömmlichen spanabhebenden Bearbeitungsverfahren anspruchsvoll und kostenaufwendig.

Vor diesem Hintergrund stellt sich die Aufgabe, ein Verfahren zur Herstellung von Elektroden und eine Elektrode mit einer hochgenauen dreidimensionalen Kontur für die elektrochemische Bearbeitung bereitzustellen. Weiterhin stellt sich die Aufgabe, eine kostengünstige Herstellmethode und kostengünstige Elektroden bereitzustellen.

Aus der Mikrostrukturtechnik ist bekannt, Formeinsätze durch lithographische Techniken oder durch Mikrofräsen herzustellen. Beim Mikrofräsen wird eine Diamantspitze über einen Werkstoff geführt, wodurch Strukturen mit einigen Mikrometern Strukturbreite und einiger Strukturgenauigkeit im Mikrometerbereich herstellbar sind.

Die Mikrofrästechnik verwendet Fräsköpfe mit einer Diamantspitze, die hohe Schrittgeschwindigkeiten bei Konturgenauigkeiten im Mikrometerbereich sicherstellen.

Nachteilig erfahren Diamantfräser in vielen metallischen Werkstoffen eine hohe Abnutzung. Für die Bearbeitung von eisenbasierten Werkstoffen, insbesondere Werkzeug- oder Formstählen sind Diamantfräser aufgrund einer chemischen Reaktion mit Eisenlegierungen nicht geeignet.

Andererseits ist es mittels Diamantfräsens möglich, mit hoher Vorschubgeschwindigkeit und hoher Strukturgenauigkeit Kunststoffwerkstoffe zu fräsen.

Entweder kann ein solcher Kunststoffwerkstoff selbst und/oder durch Zugabe von leitfähigen Partikeln leitfähig sein.

Beispielsweise können Russpartikel, Graphitpartikel oder Graphit-Nanoteilchen zugesetzt sein, die eine leitfähige Matrix im Submikrometermaßstab im Kunststoff bilden.
Eine aus einem derartigen leitfähigen Kunststoff gefräste dreidimensionale Kontur kann daher direkt als erfindungsgemäße Elektrode eingesetzt werden.

Die Erfindung betrifft also eine Elektrode für die elektrochemische Metallbearbeitung, insbesondere mittels der PEM-Technologie, wobei die Elektrode geeignet ist, die für den elektrochemischen Bearbeitungsprozess nötigen Stromdichten größer 10 A/cm² zu leiten und wobei die Elektrode eine insbesondere im Mikrometerbereich maßgenaue dreidimensional geformte Innen- oder Außenkontur aufweist. Die erfindungsgemäße Elektrode besteht zumindest teilweise aus einem nicht-metallischen Material.

Bevorzugt bildet das nicht-metallische Material einen oder mehrere Kerne, die mit einer Metallschicht mit einer Außenkontur überzogen sind.
Diese strukturgenaue Außenkontur wird durch die Oberfläche der Metallschicht gebildet.

Besonders vorteilhaft wird bei der Herstellung der Elektrode zunächst mittels Mikrofräsens mit einem Diamanten eine Kontur mit einer Genauigkeit von einigen zehn Mikrometern, insbesondere einigen Mikrometern in einem Kunststoffwerkstoff abgebildet.

Dies kann zum Beispiel mittel einer CNC (HSC)-Fräsmaschine erfolgen, die nach einem Konstruktionsdatensatz arbeitet. Alternativ wäre auch denkbar, eine Kontur mittels Rapid-Prototyping-Techniken oder durch lithographische Techniken, wie beispielsweise die LIGA-Technik abzubilden.

Als Kunststoffmaterialien sind Polycarbonat (PC), Poly Ether Etherketon (PEEK), Polyphenylenoxid (PPO), Polyphenylensulfid (PPS) oder auch Polybutylenterephthalat (PPT) einsetzbar.

Mittels Mikrofräsens wird die Oberfläche des Kerns mikrostrukturiert und/oder mikrogeglättet und/oder mikrokonturiert.

Unter mikrokonturiert ist zu verstehen, dass die Oberflächenkontur auch gegebenenfalls ohne Mikrostrukturen zu umfassen, eine Maßgenauigkeit der Kontur im Bereich von einigen zehn Mikrometern, insbesondere im Bereich von einigen Mikrometern zeigt.

Vorteilhaft kann vorgesehen sein, dass im Bereich der Kontur elektrisch leitfähige Kontakte, wie beispielsweise Kupferkontakte, angeordnet sind.

In einem Verfahrensschritt zur Elektrodenherstellung kann vorgesehen sein, dass zunächst eine Haftschicht auf die Konturoberfläche aufgebracht wird. Dies kann mittels aufdampfen oder Aufsputtern einer Schicht geschehen. Unter Haftschicht wird eine Schicht verstanden, die sowohl zur Kunststoffoberfläche, als auch zu einer weiteren leitenden Metallschicht eine gute Haftung zeigt.

Auf die Oberfläche des Kunststoffes direkt oder auf die Haftschicht wird dann insbesondere mittels Aufdampfens, Aufsputterns oder galvanischen Abscheidens eine leitfähige Oberflächenschicht aufgebracht. Die Dicke der leitfähigen Oberflächenschicht aus insbesondere Gold, Silber, Palladium, Platin, Kupfer oder Messing beträgt einige zehn Nanometer bis einige 10 Mikrometer.

Die Oberflächenschicht wird gleichmäßig aufgebracht, zum Beispiel durch Rotation des gefrästen Formteils bei der Beschichtung, so dass die Kontur der Oberflächenschicht weniger als 100 Mikrometer, insbesondere weniger als 5 bis 40 Mikrometer, besonders bevorzugt weniger als 0,01 bis 1 Mikrometer von der Kontur des Formteils abweicht.

Die hergestellte Elektrode kann eine Positiv- oder Negativelektrode sein. Unter Positivelektrode wird die Form der Kontur verstanden, also die Positivform.

Vorteilhaft wird unter Verwendung von Positiv- und Negativformen dabei ein per elektrochemischer Metallbearbeitung herzustellendes Bauteil den nachfolgend genannten Abformschritten unterworfen.

In einem ersten Schritt wird die Form und Kontur des Bauteils mittels einer geeigneten Herstelltechnik, insbesondere Mikrofräsen als Positivform, das heißt, als Positivelektrode wie vorab beschrieben hergestellt.

Diese Positivelektrode wird jetzt eingesetzt, um mittels elektrochemischer Metallbearbeitung, insbesondere PEM, eine Negativform in einen klassischen Werkstoff für PEM, wie beispielsweise Kupfer oder Messing (CUSn 39 PB3) zu erzeugen.

Die Negativform wird dann in der Serienfertigung der Bauteile eingesetzt.

In gleicher Weise kann aus den CAD-Daten einer Werkstattzeichnung auch eine Negativform, Negativelektrode erzeugt werden, die dann zur Prototypen- und/oder Serienfertigung von Bauteilen verwendet wird.

Besonders vorteilhaft lassen sich wie vorab dargelegt, strukturgenaue Formteile aus Kunststoff mikrofräsen. Diese Kunststoffteile umfassen hinsichtlich ihrer Verwendung als Elektrode elektrische Kontakte. Dies kann vorzugsweise eine gut leitfähige Platte oder ein Ring, wie beispielsweise ein Kupferring sein, der in den Kunststoff integriert ist und der die Außenfläche kontaktiert.

Das Kunststoffteil ist entweder selbst leitend und/oder wird mit einer Beschichtung versehen, die sowohl den elektrischen Kontakt als auch die Kunststoffoberfläche überdeckt und dadurch bei Anlegen eines elektrischen Potentials an den Kontakt vollständig auf dieses Potential gebracht wird.

Die Kontakte sind dazu ausgelegt, einen Strom von mindestens 1 A/cm² durchzuleiten. Da bevorzugt mit gepulstem elektrochemischen Materialabtrag mit Pulswerten von 0,1 Millisekunden bis 100 Millisekunden gearbeitet wird, ist der Hitzeeintrag in die Beschichtung begrenzt, so dass die Gefahr des Schmelzens der Metallschicht durch hohe Stromflüsse herabgesetzt ist. Somit ist es möglich, bei der Verwendung einer beschichteten Elektrode Stromdichten größer 10 A/cm² zur Metallbearbeitung einzusetzen.

Vorzugsweise erfolgt die Stromeinleitung vom elektrischen Kontakt oder den elektrischen Kontakten in die Beschichtung an mehreren Punkten, besonders bevorzugt entlang des gesamten Umfanges der Elektrode, um zu vermeiden, dass lokal überhöhte Stromdichten an den Kontaktflächen zwischen Kontakt und Metallschicht auftreten, was zu Elektromigration führen kann.

Die Erfindung wird in den folgenden Ausführungsbeispielen ausgeführt.

Dabei zeigen:
- Fig. 1:: das elektrochemische Bearbeiten
- Fig. 2:: den Bearbeitungsprozess
- Fig. 3:: eine Elektrode
- Fig. 4:: eine Formherstellung mittels PEM
- Fig. 5:: eine Elektrode mit Metallschicht
- Fig. 6:: eine Positiv- und Negativelektrode
- Fig. 7:: ein elektronisch hergestelltes Bauteil
- Fig. 8:: eine Elektrodenherstellung nach dem LIGA-Verfahren
- Fig. 9:: eine komplexe Elektrode
- Fig. 10:: eine Elektrode aus leitendem Kunststoff

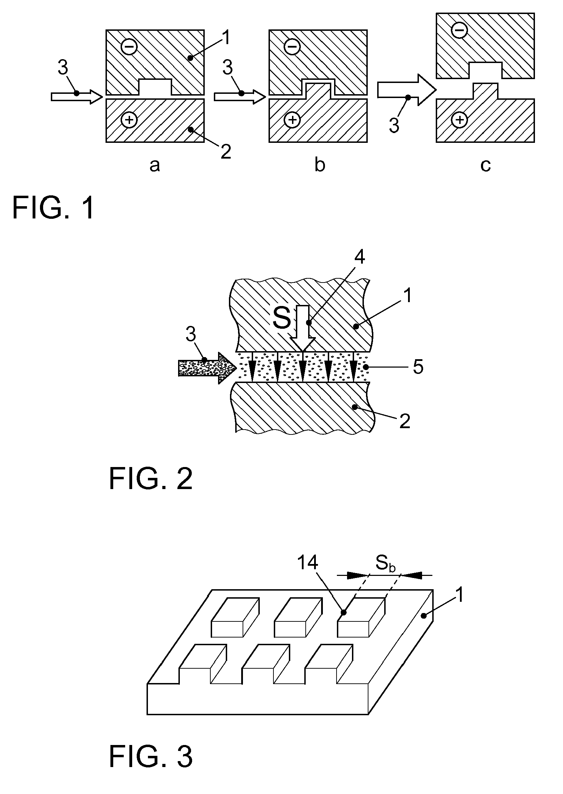

Figur 1 macht den elektrolytischen Bearbeitungsprozess deutlich. Bei diesem galvanischen Prozess wird ein Elektrolyt (3) durch einen Spalt zwischen einem Werkstück, hier die Kathode (2) und einer formgebenden Elektrode, hier die Anode (1) geleitet.

In der Figur 1 findet eine Querspülung statt, es ist aber auch denkbar, den Elektrolyten durch eine oder mehrere Bohrungen in der Elektrode oder im Werkstück einzubringen, sofern dies bauteilgemäß möglich ist.

Vorzugsweise beträgt die Spaltbreite (5) einige 10 Mikrometer bis einige 100 Mikrometer.

Der strömende Elektrolyt (3) dient als leitendes Medium für den Stromfluss. Der Strom bedingt eine Stromdichte (5) an der Werkstückoberfläche, wobei wie in Figur 2 ersichtlich, der Strom aus der Fläche der Anode (1) über den Elektrolyten (3) in die Kathode (2) fließt.

Der Pfeil in Figur 2 zeigt die Richtung des Elektronenstroms.

Vorteilhaft wird das sogenannten PEM (Präzise elektrochemische Metallbearbeitung)-Verfahren für die elektrochemische Bearbeitung eingesetzt. Hierbei wird die Elektrode (1) der Werkstückoberfläche so weit angenähert, dass sich beispielsweise die Spaltbreite (5) auf 40 Mikrometer verringert.

Da die elektrische Feldstärke vereinfacht proportional zum Abstand, also der Spaltbreite (5) gemäß E = U/d ist, lassen sich hohe Feldstärken bei Spannungen von 10-20 Volt erzeugen. Da weiterhin die Stromdichte über die elektrische Leitfähigkeit des Elektrolyten mit der elektrischen Feldstärke verknüpft ist gemäß S = oE ist, erlaubt es die geringe Spaltbreite hohe Stromdichten in den Spalt einzubringen. Während einer Haltezeit von 1 bis 10 ms wird das Potential jetzt an die Elektroden gelegt, was dann den galvanischen Materialabtragung, also das chemische Ablösen von Metallionen von der kathodisch beschalteten Werkstückoberfläche hervorruft.

Um neuen Elektrolyten (3) zuzuführen, wird nun die Elektrode (1) von der Werkstückoberfläche (2) abgehoben, bis ein Spülspalt hinreichender Breite (5) entsteht.

Durch die Querströmung und Zuführung von frischen Elektrolyten (3) unter Druck wird der Elektrolyt (3) ausgetauscht und der nächste galvanische Zyklus durch Herunterfahren der Elektrode (1) eingeleitet. Der galvanische Abtrag und das Spülen werden periodisch mit einer Frequenz von 50-100 Hertz durchführt.

Da der Metallabtrag pro Hub im Sub-Mikrometerbereich liegt, ist es möglich, eine lokale Maßgenauigkeit der Strukturen im Mikrometerbereich zu erzielen. Limitierender Faktor und Basis für die Strukturgenauigkeit und Maßhaltigkeit des herzustellenden Bauteiles ist die Maßgenauigkeit der Elektrode.

Um Strukturen der Mikrosystemtechnik, wie Mikrodüsen, Mikrosiebe, Mikrozahnröder oder mikromechanische Komponenten mittels elektrochemischer Bearbeitung herzustellen, muss daher die Elektrode eine entsprechend maßgenaue mikrostrukturierte Kontur aufweisen.

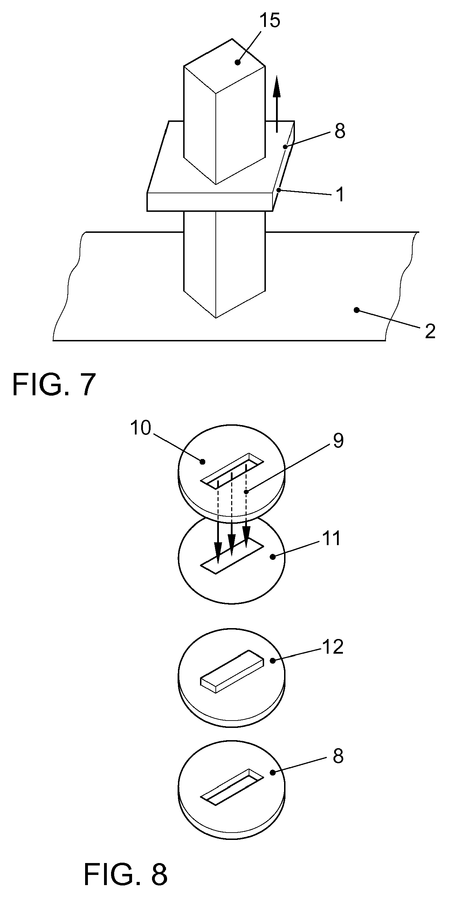

Ein Verfahren, um hochgenaue Formteile herzustellen ist die LIGA-Technologie. Hiermit gelingt es beispielsweise, mikrostrukturierte Bauteile wie in Figur 2 dargestellt, mit Strukturreiten S_{b} (14) von unter einem Mikrometer mit einer Genauigkeit von einigen zehn Nanometern maßgenau herzustellen.
Hierzu wird, wie in Figur 8 gezeigt, durch eine Maske (10) ein Resist-Kunststoff (11) belichtet. Als Beschichtungsmedium eignet sich Röntgenstrahlung oder Bremsstrahlung, die eine hohe Schärfentiefe erlauben. Auf den mikrostrukturierten Kunststoff kann entweder direkt oder galvanisch ein Metall abgeschieden werden, was dann eine Positivelektrode (12) ergibt, die in ihrem Kern aus Kunststoff, also aus einem nicht-metallischen Material besteht. Eine derartige Elektrode kann mit der derartig dreidimensional geformten Innen- oder Außenkontur kann dann als Anode (1) zum elektrochemischen Metallabtrag erfindungsgemäß eingesetzt werden.

Alternativ ist es auch möglich, in einem weiteren Verfahrensschritt nach Figur 8 die erhaltene Kunststoff-Positivform mit einem Metall, insbesondere Nickel, galvanisch zu überziehen und diese Form als Negativform (13) zu verwenden.

Diese Negativelektrode (1) umfasst bevorzugt elektrische Kontaktflächen zum Anschluss an eine elektrochemische Metallbearbeitungsmaschine und ist bevorzugt mit einem Kunststoff hinterspritzt, um die erforderliche mechanische Formstabilität herzustellen.

In einem weiteren Ausführungsbeispiel der Erfindung werden die Mikrostrukturen nach Figur 3 mittels Diamant-Mikrofräsens aus einem geeigneten Kunststoffwerkstoff herausgearbeitet.Das Diamant-Mikrofräsen erreicht Genauigkeiten im Mikrometerbereich.

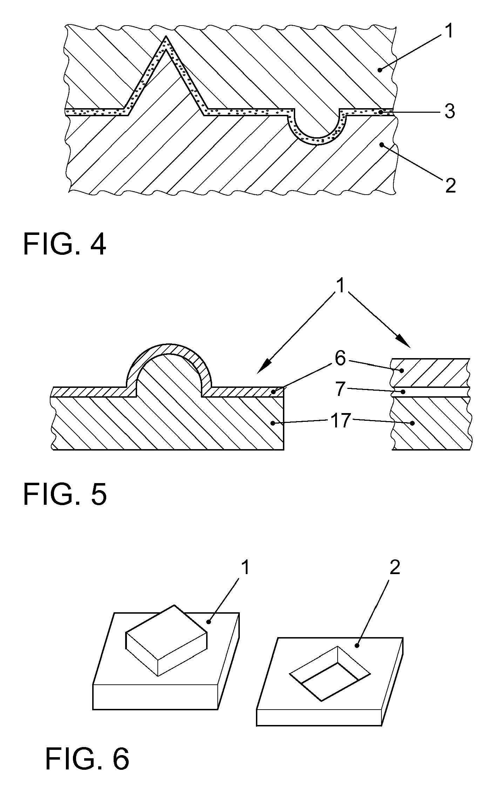

Die mittels mikrofräsens hochgenaue hergestellte Masterform wird dann wie vorab beschrieben mit einer leitfähigen Metallschicht (6) versehen, wobei wie Figur 5 zeigt, noch eine haftvermittelnde Zwischenschicht (7) in einem Zwischen-Verfahrensschritt aufgebracht wird.

Wichtig ist, dass die Metallschichten geeignet sind, die erforderlichen hohen Ströme über die Kontaktflächen und die erforderlichen hohen Stromdichten über die Elektrodenoberfläche abzuleiten.

Dabei müssen Ströme größer 1 Ampere sicher kontaktiert werden, sowie Stromdichten größer 10 A/cm² kurzschlussfest und versagensfrei über die Schicht (6) in den Elektrolyten (3) eingeleitet werden können.

Wie Figur 6 darstellt, können sowohl Positivelektroden (Figur 6, linke Seite) als auch Negativelektroden (1) der erfindungsgemäßen Art hergestellt werden.

Figur 7 zeigt die Verwendung eine derartige Negativelektrode (1) bei der elektrochemischen Metallbearbeitung, wodurch ein maßhaltiges Strukturbauteil, in diesem Fall eine Stele herausgearbeitet wird.

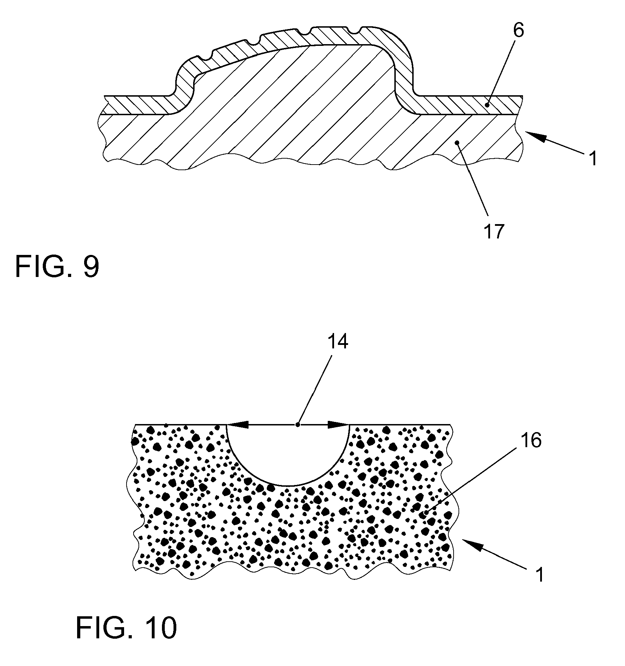

Alternativ zu einem Verfahren, wie dem die dreidimensionale Innen- oder Außenkontur der Elektrode strukturgenau eingearbeitet, insbesondere eingefräst oder eingeätzt wird, kann gemäß einer Ausführungsform nach Figur 9 vorgesehen sein, dass der nicht-metallische Kern der Elektrode gar nicht oder nur grob konturiert ist.

Bei der Elektrode nach Figur 9 wurde ein Kern aus einem keramischen Material in einem ersten Arbeitsschritt vorgeformt. Dann wurde in einem Schmelzbad eine Metallschicht (2) von 200 Mikrometern Dicke aufgebracht, wobei Schichtdicken von 0,1 µm bis 1 Millimeter auch durch Aufdampfen oder mittels galvanischem Aufwachsen aufbringbar wären.

In einem folgenden Schritt wurde dann in diese Oberflächenmetallschicht (6) eine Struktur mittels Mikrofräsens eingeformt. Der Vorteil dieses Verfahrens besteht darin, dass nur ein Materialabtrag einer Schichtstärke von unter einem Millimeter erfolgt, was Bearbeitungszeit und Kosten spart.

Eine erfindungsgemäße Elektrode (1) aus einem leitfähigen Kunststoff zeigt Figur 10. Hierbei ist ein Teil eines Oberflächenbereichs dargestellt, wobei die halbkreisförmige Einformung der Elektrodenoberfläche eine Strukturbreite (14) von 20 Nanometer bis 500 Nanometer aufweist. Eine derartige Form lässt sich beispielsweise durch Abformung einer durch LIGA-Technologie hergestellten Formmatrizze herstellen.

In dem Kunststoff-Grundmaterial sind leitfähige Partikel und/oder leitfähige Fasern eingebettet. Diese Partikel und/oder Fasern bilden eine Matrix von sich berührenden Teilen. Somit wird das Kunststoffteil elektrisch leitend. Vorteilhaft sind die eingebrachten Partikel Nanoröhrchen, wie im Kunststoff Ultraform® N2320C von BASF.

### Bezugszeichenliste

- 1-: Kathode
- 2-: Anode
- 3-: Elektrolyt
- 4-: Stromdichte
- 5-: Spaltbreite
- 6-: Metallschicht
- 7-: Haftschicht
- 8-: Negativform
- 9-: Beschichtung
- 10-: Maske
- 11-: Resist
- 12-: Positiv
- 13-: Negativ
- 14-: Strukturbreite
- 15-: Strukturbauteil
- 16-: Partikel / Faser
- 17-: nicht-metallischer Kern

## Patentansprüche

1. Elektrode (1) für die elektrochemische Metallbearbeitung, geeignet zur Beaufschlagung mit einer Stromdichte größer 10 A/cm², mit einer dreidimensional geformten Innen- und/oder Außenkontur, **dadurch gekennzeichnet, dass** die Elektrode zumindest teilweise aus einem nicht-metallischen Material besteht.

2. Elektrode nach Anspruch 1, **dadurch gekennzeichnet, dass** die Elektrode (1) eine Positivelektrode (1) mit einer Positivkontur ist.

3. Elektrode (1) nach Anspruch 1, **dadurch gekennzeichnet, dass** die Elektrode (1) eine NegativElektrode (1) mit einer Negativ-Kontur ist.

4. Elektrode (1) nach einem der vorhergehenden Ansprüche, **dadurch gekennzeichnet, dass** die Elektrode (1) einen oder mehrere nicht metallische Kerne (17) mit einer metallischen Oberflächenschicht (6) hat, wobei die dreidimensionale Kontur in die Oberflächenschicht (6) eingeformt ist.

5. Elektrode (1) nach einem der Ansprüche 1 bis 3, **dadurch gekennzeichnet, dass** die Elektrode (1) mindestens teilweise aus einem konturierten leitfähigen nicht-metallischen Werkstoff besteht.

6. Elektrode (1) nach Anspruch 5, **dadurch gekennzeichnet, dass** das Material Kunststoff mit Partikeln aus Russ oder Graphit, insbesondere Kunststoffnanoröhrchen umfasst.

7. Elektrode (1) nach Anspruch 4, **dadurch gekennzeichnet, dass** der Kern (17) konturiert ist und die Oberflächenschicht (6) als Beschichtung aufgebracht ist, derart, dass die Kontur der Schicht (6) gleichförmig der Kontur des Kerns (17) entspricht.

8. Elektrode (1) nach Anspruch 7, **dadurch gekennzeichnet, dass** die Kontur der Oberflächenschicht (6) weniger als 100 µm, insbesondere weniger als 0,5 Mikrometer bis 40 Mikrometer von der Kontur des Kerns (17) abweicht.

9. Elektrode (1) nach Anspruch 4, 7 oder 8, **dadurch gekennzeichnet, dass** das die metallische Schicht (6) Kupfer und/oder Gold und/oder Silber und/oder Messing und/oder Palladium und/oder eine Eisenlegierung enthält.

10. Verfahren zur Herstellung einer Elektrode (1) gemäß einem der Ansprüche 7 bis 9, **dadurch gekennzeichnet, dass** mittels Mikrofräsens eine dreidimensionale Innenund/oder Außenkontur in einem Kunststoffkörper (17) eingefräst wird und in einem weiteren Verfahrensschritt der Kunststoffkörper (17) mit einer homogenen leitfähigen metallischen Oberflächenbeschichtung (6) versehen wird.

11. Verfahren zur Herstellung einer Elektrode (1) nach Anspruch 11, **dadurch gekennzeichnet, dass** weiterhin eine Haftschicht auf den Kunststoff aufgebracht wird.

12. Verfahren zur Herstellung einer Elektrode (1) gemäß Anspruch 4, 7 oder 8, **dadurch gekennzeichnet, dass** mittels eines lithographischen Verfahrens, insbesondere des LIGA-Verfahrens, eine Positivkontur hergestellt wird, die Positivkontur in einem weiteren Verfahrensschritt mittels Kunststoffspritzguss eine Negativkontur abgeformt wird und in einem weiteren Verfahrensschritt eine leitfähige metallische Schicht auf die Negativkontur aufgebracht wird.

13. Verfahren zur Herstellung einer Elektrode (1) gemäß Anspruch 10 oder Anspruch 12, **dadurch gekennzeichnet, dass** die metallische Oberflächenschicht (6) galvanisch abgeschieden wird.

14. Verwendung einer Elektrode (1) mit einem strukturierten Kunststoffkern (17) und einer metallischen Außenkonturschicht, wobei die Metallschicht (6) mit elektrischen Kontakten zur Einleitung eines Stromes größer einem Ampere verbunden ist und die Metallschicht (6) Stromdichten größer 10 A/cm² leiten kann, zur elektrochemischen Metallbearbeitung.

15. Verfahren zur Herstellung von Metallbauteilen, insbesondere Formbaukörpern mittels PEM unter Verwendung einer Elektrode (1) nach einem der Ansprüche 1 bis 9.
